# NEW EUROPEAN PATENT SPECIFICATION

(11) **EP 2 809 565 B2**
(45) Date of publication and mention of the opposition decision: **11.01.2023**
(45) Mention of the grant of the patent: 31.05.2017
(21) Application number: 13703872.5
(22) Date of filing: 01.02.2013
(51) Int. Cl.: B61L 15/00, B61L 1/16, B61L 1/14

(54) **DETECTING TRAIN SEPARATION**
ERKENNUNG EINER ZUGTRENNUNG
DÉTECTION DE LA SÉPARATION D'UN TRAIN

(30) Priority: 01.02.2012 GB 201201703
(43) Date of publication of application: 10.12.2014
(73) Proprietor: OptaSense Holdings Limited, Hampshire GU14 0LX (GB)
(72) Inventor: KELLEY, John, Farnborough Hampshire GU14 0LX (GB)
(74) Representative: Abel & Imray LLP
(86) International application number: PCT/GB2013/050233
(87) International publication number: WO 2013/114129

(56) References cited:
- EP-A1- 2 368 782
- EP-A2- 1 902 923
- EP-A2- 2 112 047
- WO-A1-2011/027166
- DE-A1-102004 057 545

## Description

The present invention relates to the detection of separation of sections of a train on a railway and especially to methods and apparatus for detecting train separation/split using fibre optic distributed acoustic sensing.

Train separation, sometimes referred to as train-split or 'break-in-two', can occur where one or more of the carriages or cars of a train become accidentally decoupled from the rest of the carriages/cars and/or the locomotive. This can happen during train operation, i.e. when the train is moving, for example due to failure of the coupling mechanism.

In many train designs each car or carriage may be provided with its own set of brakes and the braking system may be arranged to fail-safe to on. For example air brakes are known where compressed air is provided from the locomotive via hoses connecting the cars together and in the event of a drop of air pressure, which would occur if two cars were to decouple, the brakes on both sections of the separated train would automatically apply using compressed air stored in a reservoir in each car. Thus both sections of the separated train would automatically come to a halt.

However in some railway operations fail-safe braking systems may not be employed. It is also possible that the fail-safe braking system may not be available for the whole train and/or may be defective. For example in the air brake system mentioned above a fault in the flow of compressed air, for instance due to one or more faulty or incorrectly controlled valves, could potentially mean that cars in a first part of a train receive a high pressure supply but cars in a second part of the train have no or only a low pressure supply. The reservoirs of compressed air in the cars of the second part of the train may therefore not be sufficiently pressurised to apply the brakes. Whilst this would mean the rear part of the train may have no brakes this may not be noticeable in a long train. A train separation resulting from a decoupling in the second section of the train would therefore not result in any fail-safe being employed.

If train separation does occur in the absence of a working fail-safe the train separation may not be readily detectable by the train driving crew, especially in the case of long freight trains which can be anything from several hundred meters to kilometres in length.

Clearly an undetected train separation can represent a serious hazard. The decoupled section could slow to a standstill on the line where it represents an unknown hazard on the line. The decoupled rear section may however have significant momentum and thus can continue to run for quite some distance. If the relative speed of the decoupled section compared to the driven section of the train increases, as may happen if the driven section of train decelerates and/or the decoupled section picks up speed down a decline, the decoupled section may impact with the rear of the rest of the train, possibly causing damage to the train and with a possible risk of derailment. In some instance the decoupled section could impact into the driven section, rebound, pick-up more speed and impact again. Alternatively if the decoupled section is travelling up an incline it could slow and then reverse direction and become a runaway travelling back in the direction it came from.

Various systems for train monitoring and control are known to provide automatic train protection but there are many rail networks that do not operate with such train protection systems. In any case such systems are typically unable to detect a train separation and would require detection of a train separation by some other means in order to provide protection for the separated train and any traffic on the network.

For instance some train control systems rely on the train itself providing positional information for example based on one or more of a GPS locator, various on-board inertial guidance systems and/or transceivers for communicating with trackside information systems/position markers. Typically the various locators, sensors or transceivers are housed in the locomotive or otherwise at the front of the train and thus realistically only provide information about the location of the front of the train. The position of the end of the train is then assumed from knowledge of the number of cars of the train. In a train separation such as described above the front of the train may continue as expected without the driver being aware of the separation. The train control system will therefore detect the expected motion of the front of the train and will not detect any problem.

The document EP 1 902 923 A1 discloses in this context a system for monitoring the state of occupation of a block section or a rail track based on axle counting.

There is therefore a desire for method and apparatus that can detect train separations. Thus according to an aspect of the present invention there is provided a method according to claim 1 for detecting separation of a train. The method of this aspect of the present invention therefore uses the principles of fibre optic distributed acoustic sensing (DAS). Distributed acoustic sensing is a known type of sensing where an optical fibre is deployed as a sensing fibre and repeatedly interrogated with electromagnetic radiation to provide sensing of acoustic activity along its length. Typically one or more input pulses of radiation are launched into the optical fibre. By analysing the radiation backscattered from within the fibre, the fibre can effectively be divided into a plurality of discrete sensing portions which may be (but do not have to be) contiguous. Within each discrete sensing portion mechanical disturbances of the fibre, for instance, strains due to incident acoustic waves, cause a variation in the properties of the radiation which is backscattered from that portion. This variation can be detected and analysed and used to give a measure of the intensity of disturbance of the fibre at that sensing portion. Thus the DAS sensor effectively acts as a linear sensing array of acoustic sensing portions of optical fibre. The length of the sensing portions of fibre is determined by the characteristics of the interrogating radiation and the processing applied to the backscatter signals but typically sensing portions of the order of a few meters to a few tens of meters or so may be used. As used in this specification the term "distributed acoustic sensing" will be taken to mean sensing by optically interrogating an optical fibre to provide a plurality of discrete acoustic sensing portions distributed longitudinally along the fibre and the term "distributed acoustic sensor" shall be interpreted accordingly. The term "acoustic" shall mean any type of pressure wave or mechanical disturbance that may result in a change of strain on an optical fibre and for the avoidance of doubt the term acoustic be taken to include ultrasonic and subsonic waves as well as seismic waves.

DAS can be operated to provide many sensing channels over a long length of fibre, for example DAS can be applied on fibre lengths of up to 40km or more with contiguous sensing channels of the order of 10m long. Thus a long length of railway can be monitored but with high spatial resolution sampling. For length of more that 40km or so several DAS sensors units can be deployed at various intervals to provide continuous monitoring of any desired length of railway.

The ability to detect acoustic signals over a plurality of separate channels which can be contiguous over a long length of the railway allows signals indicative of train separation, i.e. a train split, to be detected as will be described in more detail below.

Detecting the signature indicative of a train having separated involves detecting a first acoustic event associated with a first part of a train and a second acoustic event associated with a second different part of the train and detecting that the separation, i.e. the distance, between the first acoustic event and second acoustic event is beyond a threshold. In other words the method may involve uses the acoustic response from the DAS sensor(s) to identify different parts of the train. It will be appreciated that as a train move along the railway it produces a significant noise in the section of track that it travels along. In the present invention the acoustic signals produced by the train as it moves are detected and used to distinguish different part of the train. As the train moves there may be some change in distance between any two given locations on the train (not on the same car/carriage) arising from the normal operation of the couplings between cars. However for any two given locations on a train the amount of separation will stay within a range (which will depend on how far apart the two locations are, e.g. how many couplings there may be between the two locations). The method therefore detects whether the separation between the two parts of the train exceeds a threshold. The threshold will clearly be set at a level which is greater than the amount of normal distance variation that may be experienced.

In one embodiment the method comprises analysing the acoustic response from the acoustic sensor portions to locate an acoustic signal indicative of the front of the train and an acoustic signal associated with the rear of the train and determining the distance between the acoustic signals indicative of the front and the rear of the train.

In this embodiment acoustic signals associated with the front and rear of the train are detected. This could be performed by analysing the acoustic responses from a plurality of acoustic sensor portions to detect an acoustic response from extended length of the fibre, i.e. from a plurality of contiguous sensor portions. As mentioned above the train will create a sound as it moves which will be detected by the sensing portions of fibre adjacent the relevant part of the track. All the sensing portions adjacent the train will detect a significant acoustic signal and thus the position of the train will show up as continuous area of acoustic noise. It will be appreciated of course that sound produced by the train will also travel ahead of the front of the train and backwards from the train and thus sections of fibre ahead of and behind the train will also detect noise due to the train movement. However although some sounds associated with train movement, such as ringing of the rails, may travel for a significant distance, such sounds will have a different characteristic to the sounds detected when the train is actually adjacent a sensing portion. Thus the acoustic response can be analysed to detect a generally continuous acoustic signal indicative of the train being adjacent or very near the sensing portions. The method may therefore involve identifying the beginning and end of a continuous acoustic disturbance indicative of the train.

The start and end of the acoustic response due to the train can therefore be detected. As the deployment of the optical fibre alongside the railway will be known the distance between the front and rear of the train can thus be determined.

If the length of the particular train being monitored at a given time is known it would be possible to compare the determined distance to a threshold based on the maximum expected length of the train (possibly including some margin for slight inaccuracies in detecting the front and rear of the train). If the length of the train exceeds the threshold a train separation event may be detected.

However sometimes the expected length or the train may not be known or the actual length may be different from the expected length as a different number of cars may have been attached in reality than the number expected. This is not a problem with embodiments of the present invention as the DAS sensor can provide continual monitoring of the train as it progressed along a monitored section of track. Thus the method may involve repeatedly determining the distance between the acoustic signals indicative of the front and the rear of the train and detecting if said distance increases beyond a threshold amount. In this way it doesn't matter what the initial length of the train was, any changes in the distance between the front and rear of the train above a threshold amount may be detected. Thus train separation can be detected even on trains of unknown nominal length. The threshold may therefore be based on the previously determined distance between the front and rear of the train. In other words the DAS system will provide an indication of the general length of the train as it moves on a monitored section of track by detecting the distance between the acoustic signals associated with the front and rear of the train. If this measured distance then increases by a unexpected amount, for instance the length increase above a certain percentage of the originally measured length, this may indicate a train separation event.

As mentioned above the distance between the front and rear of the train will vary in normal operation as cars either get closer together (if the train is decelerating or going downhill say) or further apart (if the train is accelerating or going uphill say). An initial value of train length may therefore be obtained and compared with subsequent values of train length. A threshold based on the initial value plus a certain percentage may be established. If the distance between front and rear exceeds this threshold a train separation may be detected. If the train stays within threshold for a period of time the further values of distance between front and rear determined in the interim may used to refine the initial value and/or threshold. The fact that a long section of track can be monitored with high spatial resolution with a DAS system, e.g. 40km or so of track with of the order of 10m sensing portions all along that 40km, is what enables such a method to be implemented in an effective manner.

In one embodiment detecting the acoustic signals associated with the front and rear of the train respectively comprises identifying the first sensing portion and last sensing portion to detect an acoustic signature resulting from the train passing track features. In particular the method may comprise identifying acoustic signals associated with the wheelsets of the train passing track features. As will be appreciated as the train moves there will be a variety of sounds produced. However in particular any track features that produce a noise as the wheelsets of the train pass over the feature will produce a characteristic repetitive pattern resulting from the arrangement of the wheelsets. Thus for instance for a jointed track there may be a noise produced when the wheels pass from one rail section to another. This will typically produce an acoustic signal. As the following wheelsets pass over the same joint they will also each produce a similar acoustic signal. Thus an acoustic sensing portion in the vicinity of the rail joint will detect a characteristic pattern. For instance consider a train having a locomotive with two front wheelsets and, after a larger gap, two rear wheelsets. If the train is travelling at a relatively constant speed the sensing portion adjacent the joint or other track feature may detect four distinct sounds corresponding to each of the four wheelsets crossing the feature in turn, with two sounds relatively close in time followed, after a larger gap by another two sounds relatively close in time. The distinctive repetitive pattern of the wheelsets crossing track features may therefore be used to detect the location of the train and identify the front and rear of the train by identifying the first and last sensing portions to reliably detect the characteristic sounds. In general however the passage of the train on a track which is relatively featureless with generate acoustic signals associated with the passage of the wheelsets/axels of the train which manifest as relatively intense broadband noise 'spikes' within the general acoustic signal due to passage of the train.

In addition to or as an alternative to detecting the front and rear of the train the method may comprise identifying acoustic features associated with separate cars of the train. Thus an acoustic signal associated with a first car of the train may be detected and distinguished from an acoustic signal associated with a second car of the train. Again the responses to wheelsets crossing track features or general broadband noise spikes due to the wheelsets could be used to discriminate between different cars of the train.

Consider that a train consists of several cars of the same arrangement. Each with have a particular arrangement of wheelsets. For example, as a simple example, a car may have just two wheelsets, front and rear, which are separated by a first distance - which is effectively fixed. There will also a separation between the front and rear wheelsets of adjacent cars. This second distance, which may well be different to the first distance, may vary within a range as the train moves. For the sake of argument assume that maximum amount of the second distance in normal use is still shorter than the first distance. As a series of cars passes a given track feature each wheelset would result in a similar acoustic signal being produced. For a train travelling at relatively constant speed this would produce a series of instances of a distinctive acoustic response separated by gaps in a pattern long, short, long, short and so on. The duration of the long gaps would be reasonably constant whereas the duration of the short gaps may vary slightly. If such a pattern were detected it could be identified that the signals detected on either side of the long gaps correspond to the wheelsets of an individual car crossing the track feature whereas the short gaps represents the time between wheelsets of adjacent cars. Thus the separation between cars can be determined and monitored against a threshold.

The method may therefore involve identifying acoustic signals associated with a wheelset passing a track feature and detecting the interval between acoustic signals corresponding to different wheelsets. The interval between acoustic features generated by the wheelsets on the same car and the interval between features generated by wheelsets on different cars may be determined.

In order to determine the actual distance between the cars it would be necessary to know the speed of the train. This however could be calculated by looking at the rate of progression of the front and/or rear of the train which can be determined as set out above. Alternatively if the length between the axles of the cars is known the distance between cars can be determined from comparing the measured duration between cars to the duration between acoustic signals due to the wheelsets of a single car. Once the distance between the rear wheelset of one car and the front wheelset of the next car has been determined the distance could be compared to a maximum allowable threshold.

Alternatively the separation between cars, in time, could be monitored directly against a time threshold which could for instance by adjusted based on the speed of the train. Alternatively the method may involve determining whether the interval between features generated by wheelsets on different cars exceeds a threshold based on the interval between wheelsets on the same car. For example if it is possible to determine the time between the first and last wheelsets of a single car and it is known that the distance between wheelset of adjoining cars should never be greater than distance between the first and last wheelsets of a single car the measured duration for the wheelsets of a single car to pass a track feature could be used directly to determine an appropriate threshold.

In practice the actual arrangement of the wheelsets of the cars may be more complex. For instance each car may have front and rear bogies each supporting two wheelsets. In general though for an individual car there will therefore be generally fixed distances between the various wheelsets (subject to motion of the bogies in use). There will also be a separation between wheelsets of adjoining cars - which is typically unlikely to be the same as the separation between the wheelsets on the same car. Thus the same type of analysis can be performed but, for example, looking for pairs of acoustic signals in relatively quick succession corresponding to a pair of wheelsets on a bogie followed later by another pair of acoustic signals representing the next bogie.

It is of course possible that the separation between wheelsets of adjoining cars may be nearly the same as the separation between wheelsets on a given car. In this case it might not be possible to uniquely identify which signals correspond to the wheelsets of the same car and which signals correspond to wheelsets of adjacent cars. However the relatively duration can still be compared to one another and monitored over time.

Also the train may comprise a number of different cars, each having different wheel arrangements, and connected together in an unknown order. However the method can still be applied to detect train separation.

In practice the train will pass a number of track features along the length of the track and each one may be adjacent different sensing portions of the distributed acoustic sensor. Thus the relative durations of the acoustic signals as detected when the train passes one track feature may be compared to the relative durations detected by another sensing portion at a later point in time as the train passes another track feature. In effect the relative pattern obtained at one part of the track may be compared to the relative pattern obtained at another part of the track. A change in train speed will affect the absolute spacing between acoustic signals but not the relative spacing. If a significant change is detected, and the duration between two parts of the pattern of acoustic signals has increased significantly out of proportion with the rest of the pattern this could be an indication of train separation.

Rail joints have been mentioned as suitable track features. Rail joints are typically separated every few tens of metres and thus each joint could be located adjacent a separate sensing portion of optical fibre with a sensing portion length of the order of 10m or so. This allows monitoring of almost the whole length of the train continuously which also allows for changes in durations between events due to train acceleration/deceleration to be readily determined. However any track feature that responds to passage of the train by producing a distinct acoustic response to set parts of multiple different parts of the train would be suitable.

In general therefore the method may involve identifying the general acoustic signals detected by a DAS sensor due to passage of a train on a monitored section of track. The detected acoustic signals due to the train may then be analysed to detect a series of relatively intense broadband signals, i.e. signals at a broad range of frequencies. Such signals have been found to correspond to signals generated by the wheelsets of the trains and thus can be used to identify the wheelsets/axels of the train. By identifying the signals due to the wheelsets of the train, as it moves along the track, any train separation events, i.e. train split, can be readily detected by looking at the distance (or time) separation between the signals due to the wheelsets.

It should be noted that strain sensors have been used for axel counting applications in the past, for instance for detecting whether a train has completely cleared a section of track (such as a level crossing). The embodiments of the present would allow axel counting but axel counting is generally applied in a fixed location and requires a knowledge of the number of axels of a train. The embodiments of the present invention use acoustic sensing to determine the signals due to the wheelsets continually along the monitored section of track and determine the distance between the signals due to the wheelsets as the train moves. This is quite different to axel counting.

In use the optical fibre may be deployed alongside the track. At least part of the optical fibre may be buried along the path of the track. The optical fibre that is used may be part of a communications infrastructure that already runs alongside the track or it may be installed specifically for distributed acoustic sensing. Additionally or alternatively at least part of the optical fibre may be attached to the track. Buried optical fibre is protected from environmental effects and can be left in-situ for many years without requiring any maintenance. Although the ground may provide some attenuation of acoustic signals good signals can still be detected. However a fibre attached to part of the track, for instance attached to a rail, may be able to detect additional signals and may be able to offer better discrimination in some applications.

At least part of the optical fibre may be deployed adjacent to a plurality of adjacent tracks. In other words at least part of the optical fibre may run alongside two or more rail lines in parallel. In this case the distributed acoustic sensing may provide detection of train separation for trains travelling on two or more of the parallel tracks. If train movements are known in advance the particular track being monitored will be apparent from the context, i.e. the time and location along the tracks of the acoustic signals. However in some embodiments the method may identify which of the plurality of adjacent tracks a train is travelling on. There are a variety of ways that the particular track could be identified. If the location of at least some track features varies from track such that relevant sensing portions of fibre that are alongside the track features differ for each track then the passage in a train on a given track will be identifiable from the location of the acoustic responses to such features.

Additionally or alternatively the characteristic of the acoustic signals generated by passage of the train may be analysed to determine the lateral offset from the fibre to source of the signals. This could be performed by detecting the time of arrival of a given acoustic stimulus at different portions of the sensing fibre. The difference in time of arrival between the sensing portions will vary depending on the degree of lateral offset. Thus a distinctive signal, such as the train sounding its horn, could be detected at multiple different sensing portions and the difference in time of arrival determined. Alternatively any suitable distinctive acoustic signal could be used. Additionally or alternatively the signals could be analysed to detect a rate of change of Doppler shift in any signal of relatively constant frequency. The maximum rate of change in Doppler shift will depend on how close the sensing portion is to the source of the constant frequency sound.

In the event that a train separation is detected, the method may comprise identifying the location of the train split. Where the method is monitoring the front and rear of the train the method may identify the general location of the split in terms of the location of the rear of the decoupled part of the train. Where the method involves monitoring the acoustic signals in response to track features the actual section of decoupled train may be identified and tracked. The method may also include generating an alarm which may include at least one of a visible and/or an audible alarm in a control room or an alert to a control room. Automatically signalling may go into effect to prevent other trains on the same line from proceeding and if the decoupled section is runaway then alerts may be sent to crossings and stations on the line. The driver of the train which has separated may also be automatically notified by radio. In the event that the decoupled part of the train is still travelling in the same direction the driver may be able to gradually reduce speed to avoid a high momentum collision and slowly bring both sections of the train to a halt.

In some implementations a control room will receive data from a plurality of DAS sensor deployed along the rail network and process the returns to detect train split. Thus in another aspect of the invention there is provided a method of detecting train separation comprising: receiving measurement signals corresponding to detected acoustic signals from a plurality of locations along the length of a railway; and analysing the measurement signals to detect a signature indicative of a train separation.

The method of this aspect of the invention offers all the same advantages and may be used in the same ways as the first aspect of the invention. In particular the measurement signals are acquired by performing distributed acoustic sensing on an optical fibre deployed along the length of the railway. Any type of acoustic sensor array where a plurality of sensor are deployed along the length of the railway could be used but DAS offers a relatively cheap and reliable way of providing acoustic sensor over long continuous lengths that does not require lots of individual sensors with individual power demands and maintenance requirements. Thus DAS is a practical way of providing acoustic sensing along the length of railway in a way that was not otherwise practical.

The invention also relates to a computer program for performing the method according to claims 1-12 as described above.

In general the present invention relates to the use of fibre optic distributed acoustic sensing to detect a train split.

In another aspect there is provided a system for detecting for train split according to claim 14. The system may operate in the same way as described above in relation to the method and may be implemented in any of the described embodiments. The system may include at least one distributed acoustic sensor unit.

The invention will now be described by way of example only with respect to the following drawings; of which:
Figure 1 illustrates a convention DAS sensor;
Figure 2 illustrates a how a DAS sensor may be deployed along a railway;
Figure 3 illustrates the response of a DAS system to a train moving on the railway;
Figure 4 illustrates the how repeatedly acoustic signals can be used to determine the relative locations of parts of a train; and
Figure 5 shows the acoustic signal detected by a DAS sensor from a train passing on a monitored section of track.

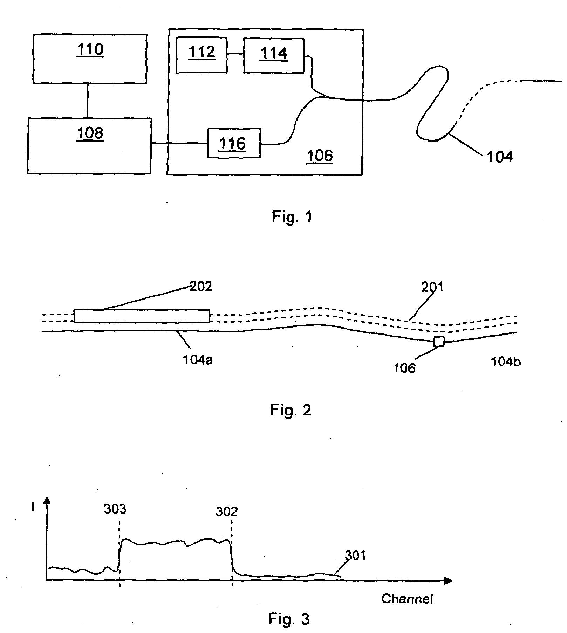

**Figure 1** shows a schematic of a distributed fibre optic sensing arrangement. A length of sensing fibre 104 is removably connected at one end to an interrogator 106. The output from interrogator 106 is passed to a signal processor 108, which may be co-located with the interrogator or may be remote therefrom, and optionally a user interface/graphical display 110, which in practice may be realised by an appropriately specified PC. The user interface may be co-located with the signal processor or may be remote therefrom.

The sensing fibre 104 can be many kilometres in length and can be, for instance 40km or more in length. The sensing fibre may be a standard, unmodified single mode optic fibre such as is routinely used in telecommunications applications without the need for deliberately introduced reflection sites such a fibre Bragg grating or the like. The ability to use an unmodified length of standard optical fibre to provide sensing means that low cost readily available fibre may be used. However in some embodiments the fibre may comprise a fibre which has been fabricated to be especially sensitive to incident vibrations. The fibre will be protected by containing it with a cable structure. In use the fibre 104 is deployed in an area of interest to be monitored which, in the present invention may be along the path of a railway as will be described.

In operation the interrogator 106 launches interrogating electromagnetic radiation, which may for example comprise a series of optical pulses having a selected frequency pattern, into the sensing fibre. The optical pulses may have a frequency pattern as described in GB patent publication GB2,442,745 the contents of which are hereby incorporated by reference thereto, although DAS sensors relying on a single interrogating pulse are also known and may be used. Note that as used herein the term "optical" is not restricted to the visible spectrum and optical radiation includes infrared radiation and ultraviolet radiation. As described in GB2,442,745 the phenomenon of Rayleigh backscattering results in some fraction of the light input into the fibre being reflected back to the interrogator, where it is detected to provide an output signal which is representative of acoustic disturbances in the vicinity of the fibre. The interrogator therefore conveniently comprises at least one laser 112 and at least one optical modulator 114 for producing a plurality of optical pulses separated by a known optical frequency difference. The interrogator also comprises at least one photodetector 116 arranged to detect radiation which is Rayleigh backscattered from the intrinsic scattering sites within the fibre 104. A Rayleigh backscatter DAS sensor is very useful in embodiments of the present invention but systems based on Brillouin or Raman scattering are also known

The signal from the photodetector is processed by signal processor 108. The signal processor conveniently demodulates the returned signal based on the frequency difference between the optical pulses, for example as described in GB2,442,745. The signal processor may also apply a phase unwrap algorithm as described in GB2,442,745. The phase of the backscattered light from various sections of the optical fibre can therefore be monitored. Any changes in the effective optical path length within a given section of fibre, such as would be due to incident pressure waves causing strain on the fibre, can therefore be detected.

The form of the optical input and the method of detection allow a single continuous fibre to be spatially resolved into discrete longitudinal sensing portions. That is, the acoustic signal sensed at one sensing portion can be provided substantially independently of the sensed signal at an adjacent portion. Such a sensor may be seen as a fully distributed or intrinsic sensor, as it uses the intrinsic scattering processed inherent in an optical fibre and thus distributes the sensing function throughout the whole of the optical fibre. The spatial resolution of the sensing portions of optical fibre may, for example, be approximately 10m, which for a continuous length of fibre of the order of 40km say provides 4000 independent acoustic channels or so deployed along the 40km of railway. This can provide effectively simultaneous monitoring of the entire 40km section of track. In an application to train monitoring the individual sensing portions may each be of the order of 10m in length or less.

As the sensing optical fibre is relatively inexpensive the sensing fibre may be deployed in a location in a permanent fashion as the costs of leaving the fibre in situ are not significant. The fibre may be deployed alongside the track and may for instance be buried alongside a section of track.

**Figure 2** illustrate a section of rail track 201 with an optical fibre buried alongside the track. As mentioned above fibre optic sensing can be performed on fibre lengths of the order of 40 - 50km. However for some DAS sensors it can be difficult to reliably sense beyond 50km or so along a fibre. A length of 40-50km may be sufficient to monitor a desired section of track, say between main stations, and other fibres could be deployed to monitor other sections of track. For very long tracks it may be necessary to chain several DAS sensors together. Figure 2 illustrates one interrogator unit 106 arranged to monitor one optical fibre 104a deployed along one part of the track and another optical fibre 104b deployed along another length of track. The interrogator unit could house two lasers and detectors etc., i.e. dedicated components for each fibre or the laser and possibly detector could be multiplexed between the two fibres. After 40km say of fibre 104b another fibre could be deployed which is monitored by another interrogator unit. Thus there could be 80km or so between interrogator units.

In use the interrogator operates as described above to provide a series of contiguous acoustic sensing channels along the path of the track. In use the acoustic signals generated by a train 202 in motion along the track 201 may be detected and analysed to detect train separation. The DAS sensor thus provides a monitoring system that can monitor long lengths of track with a high spatial resolution. As mentioned the sensing portions may be the order of metres in length. Deploying the sensor however simply involves laying a fibre optic cable along the path of the track - and in some instance suitable fibre optics may already be in place.

As a significant length of track can be monitored by contiguous sensing portions of fibre it can relatively straightforward to detect train movement along the track. Clearly movement of the train will create a range of noises, from the engine noise of the locomotive, noises from the train cars and the couplings and noise from the wheels on the track. The acoustic signals will be greatest in the vicinity of the train and thus be looking at the intensity of the signals detected by the sensor the returns from the sensing portions of fibre adjacent the current position of the train will exhibit a relatively high acoustic intensity. As illustrated in figure 3, which illustrates detected acoustic intensity against channel of the DAS sensor, the position of the train can thus be generally determined by detecting a continuous acoustic disturbance of relatively high intensity.

It is therefore possible to try to estimate the position of the front and rear of the train by detecting where the continuous disturbance starts 302 and ends 303. By monitoring the position of the front and rear of the train as it moves any changes in total length of the train can be detected and if the change in length is greater than a threshold amount a train separation can be detected. It will be understood that a certain amount of change in train length will occur as the couplings are designed to allow a certain degree of relative movement between the cars, e.g. for shock absorbing. Thus in a long freight train there may be noticeable changes in the separation between the front and rear of the train in normal operation. If however the coupling permit a relative movement of at most 5% of the length of an average car then clearly a change in length of the order of 10% may indicate a train split. Thus the present invention may monitor the separation of the front and rear of the train over time to determine a change in length above a threshold amount. If such a change in length is detected a train split could be detected.

Note it is not necessary to know the exact length of the train or the arrangement of cars that make up to the train although this information can be used to provide additional accuracy if available. The train length can be determined by monitoring the initial separation of the front and rear of the train over a period of time. For instance imagine a train leaves a station onto a monitored section of track. The exact length of the train is not known but in some scenarios it may be assumed that a train split would have been noticed in the station. The front of the train is tracked along the monitored section of track and once all the train is on the monitor section the position of the rear of the train and thus an initial value of separation between the front and rear can be acquired. As the train continues the positions of the front and rear will be continually tracked and further values of the separation of the front and rear obtained. If these values stay within a set range (say within 5% for example) then over time the initial value for the separation may be refined into an average value. The initial, or refined average value can be used to set a threshold, e.g. 10% of the separation, and if the determined separation is found to change by more than the threshold amount a train separation event may be detected.

As illustrated in Figure 3 it may be possible to detect the position of the front or rear of the train simply by looking at the intensity profile of the sensing portions and identify the beginning and end of a generally continuous acoustic disturbance above a certain intensity. However general noise associated with train movement may travel away from the train and the speed of sound, especially along the rails, will be much faster than the train speed.

Thus in one embodiment a distinctive sound associated with the train passing track features may be used to detect where parts of the train are. For example in jointed track where there are gaps between rail sections there may be a noise generated at the wheel passes from one rail section to the next. This will create a relatively short duration relatively high intensity noise. A repeated pattern of such noises will then occur due to the passage of the various wheel sets over the same joint. Note that any track feature that leads to an acoustic response from a wheelset will generate such a repeated pattern of acoustic signals. This could be a rail junction, rail joint, rail weld or the like or a defect on the rail. It will be understood that rail joints tend to occur every few tens of metres of track. Thus typically there will be at most one rail joint per 10m sensing portion of fibre allowing the response of a single track feature to be detected by an individual sensing portion.

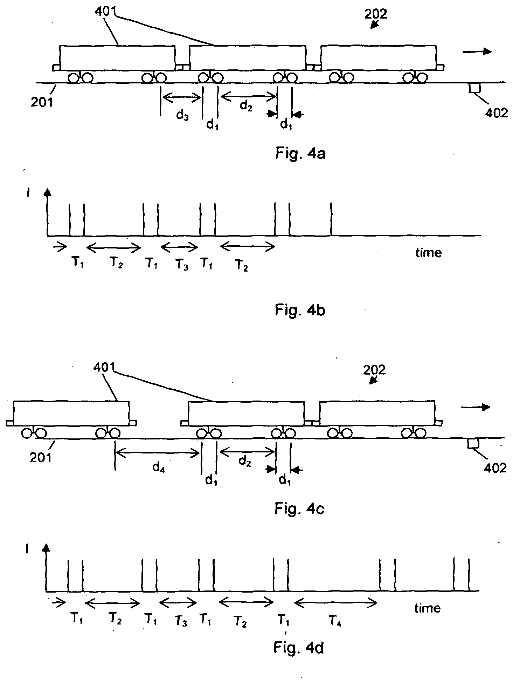

Figure 4a illustrates this principle. Figure 4a shows part of a train comprising three similar coupled cars 401, for example boxcars, on a rail track 201. Each car 401 has a front bogie supporting two wheelsets and a rear bogie supporting two wheelsets.

As illustrated the distance between the axles of the wheelsets of the front bogie is d₁ and in this example the same spacing applies to the rear bogie. The distance between the inner axles of the front and rear bogies on a car is d₂. The nominal distance between the last axle of one car and the first axle of the next car is d₃. In this example d₂ > d₃ > d₁ although the skilled person will appreciate that other arrangements are possible.

Figure 4a shows this section of the train moving towards a feature 402 on the track, e.g. a rail joint, which will result in an acoustic signature as the wheelset moves over it. If the train moves at a constant speed this will result in a series of distinct acoustic signals as shown in Figure 4b. Figure 4b shows intensity against time (ignoring background noise of the general train motion for clarity). At a certain time there is a first acoustic signal followed a time T₁ later by a second signal. These signals correspond to the wheelsets of the front bogie of the front car. There is then a gap of T₂ before another pair of signals separated by T₁. This corresponds to the time taken for the rear of the first car to travel to the feature 402 and the wheelsets of the rear bogie to pass over. There is then a gap of T₃ before the front bogie of the second car reaches the feature.

It can therefore be seen that sensing portion in the vicinity of feature 402 will detect a repeated pattern of acoustic signals as the wheels pass the feature at that location. This allows the determination of the fact that wheels of the train are passing that location.

It is of course possible that the acoustic signal from the wheels the feature may travel to the next sensing portion. Given the level of general noise the signals from a given track feature may only be detectable by sensing portions close to that feature. If any signals do propagate relatively long distances and thus are detected by several sensing portions the time of arrival at the different portions can be determined to detect the earliest time of arrival - which obviously corresponds to the closest sensing portion to that feature. Thus by analysing the signals detected by the sensing portions at the front and rear of the continuous series of disturbances illustrated in Figure 3 sensing portion which detects the sounds of the wheelsets of the front or rear of the train can be determined.

The repetitive pattern of acoustic signals shown in Figure 4b can however be used to determine which wheelsets the signals correspond to and thus the relative separation of the cars. As mentioned above the pattern consists of signals having successive gaps of T₁, T₂, T₁, T₃, T₁, T₂ and so on where T₂>T₃>T₁. It will be appreciated that the pairs of signals separated by T₁ correspond to the two wheelsets of a bogie. Given that the gap T₂ is greater than the gap T₃ it can be expected that the gap T₂ corresponds to the gap between bogies of an individual car and the gap T₃ corresponds to the gap between cars. Assuming the cars are the same and the wheel arrangement is known this can be easily verified by listening to a few more sequences. As long as the train speed is relatively constant (and typically long train of the type which may be most desirably monitored do not have high acceleration or deceleration) then the gap between bogies on the same car should relatively constant and whereas the gap between cars may vary.

This can therefore be used to detect train separation. Figure 4c illustrates the train with the last car having become decoupled and dropped back behind the rest of the train. Figure 4d then shows the acoustic signals that may be detected. In this instance the gap between the first few acoustic signals detected may exhibit the same relative pattern with durations (relative to one another) between the acoustic signals of T₁, T₂, T₁, T₃, T₁, T₂ respectively with T₂ > T₃ > T₁. From this sequence it can be deduced that T₁ is due to the gap between wheel sets of a bogie, T₂ is due to gap between bogies on one car and T₃ is due to the gap between the first and second cars. However the next signals only occur after a gap of T₄ which is greater than T₂ and T₃. At this stage in the sequence it is known that T₄ is due to the gap between the second the third carriages. The duration T₄ may therefore be compared to a threshold, which may be based on the duration T₃ (or indeed the durations T₁ or T₂) and it can be determined that the duration T₄ exceeds the duration. In this case it indicates that the corresponding distance d₄ between the bogies of the second and third cars is greater than the normal maximum distance - indicating that the cars have become decoupled.

The analysis above assumed some knowledge that the cars were all the same that thus longer duration T₄ wasn't due to a longer coupling or actually T₂ being due to the coupling between cars with T₃ representing a short car and T₄ a longer car. However the method can be applied even with no knowledge of the train arrangement by comparing the response as the train passes over one track feature with the response as the train passes another, later, train feature. In this instance the train speed may have varied, changing the absolute durations, but the relative durations between the acoustic signals would be substantially the same (allowing for normal movement of the coupling). Thus the patterns may be normalised and compared and any variation above a threshold used to indicate train separation.

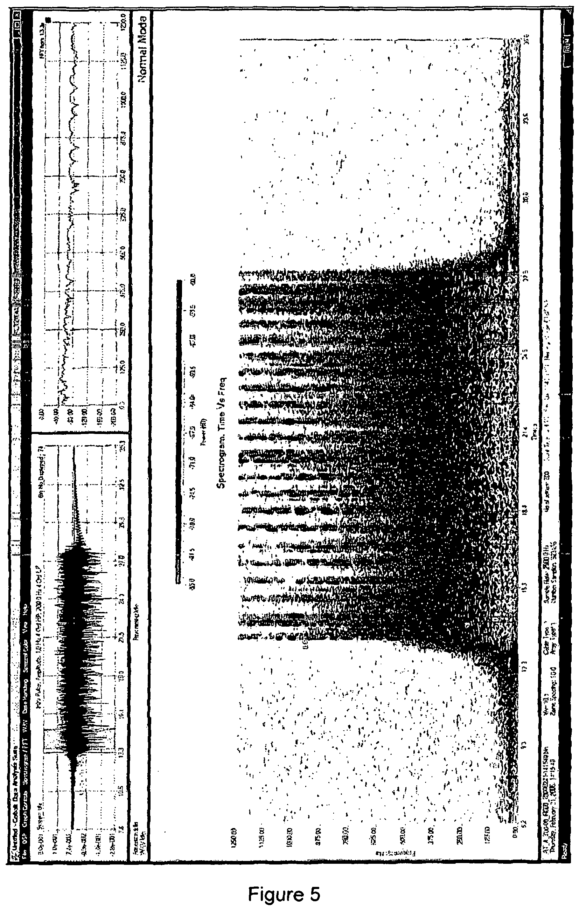

In general the acoustic signal detected from a train by a DAS sensor will therefore produce a relatively intense acoustic signal which will be detected by the sensing portions of the DAS sensor in the vicinity of the train. Within this general signal there will be a series of identifiable acoustic signals corresponding to the wheelsets/axels of the train. These signals will typically be relatively intense broadband signals. Figure 5 shows the acoustic signals recorded by multiples channels of a DAS sensor acquired from a sensing fibre alongside a rail track when a train passed by. It can be seen that there is a clear acoustic signal detected by multiple contiguous channels of the DAS sensor which corresponds to the train. It can be seen that this signal is relatively well defined in terms of a leading and trailing edge of the high intensity signals. This can be used generally to determine the position of the front and rear of the train and thus the general length of the train can be determined as discussed above.

The presence of a repetitive series of broadband noise spikes are also readily apparent. These signals are due to the passage of the wheelsets/axles of the train along the track. These signals are detectable due to the high spatial resolution of the DAS sensor and the ability of the DAS sensor to detect acoustic signals at a range of frequencies from a long length of track.

A DAS sensor according to embodiments of the present invention may therefore be arranged to analyse the acoustic signals to detect such broadband noise spikes. From a detection of such broadband noise spikes the train is effectively monitored along its whole length as it moves along the track. The separation between such signals can thus be monitored to detect an increase in separation greater than a certain amount, e.g. greater than a set percentage, in order to detect an unplanned train separation event.

If a train separation event is detected it could be an initial tentative alert which initiates some initial precautions whilst the separation is being confirmed, for instance by further tracking of the train. The driver could also be contacted to see if he can confirm or deny the train separation. For instance a slight acceleration may be applied to see if the detected excess separation increases. Once a train separation is detected a definite alert may be generated in a train control room. The driver may be contacted to bring the train to a controlled halt to try to gently halt the decoupled section. If the decoupled section comes to a separate halt the position on the track can be noted and other trains controlled to avoid that section of track until the hazard is cleared. If the decoupled section starts to runaway, for instance by rolling back down a slope, any trains, stations, crossing etc on that line could be notified and precautions taken.

Whilst the decoupled section is moving it can be tracked using the same techniques as discussed generally above.

The use of DAS therefore allows train separation to be detected. When a train separation is detected the location is readily available and appropriate precautions can be put in place. The motion of the decoupled section can be tracked, as can other trains on the monitored network until the decoupled section is safely recovered.

DAS is particularly applicable to such monitoring as it provides low cost continuous monitoring of long lengths of railway whilst providing data from contiguous sensing portions from along the whole length of the railway is required.

## Claims

1. A method of detecting that a portion of a train has become separated from the rest of the train comprising:
performing distributed acoustic sensing on at least one optical fibre (104a, 104b) deployed along the length of a railway (201) by interrogating the optical fibre with electromagnetic radiation and detecting, using a photodetector, the radiation Rayleigh backscattered from intrinsic scattering sites within the fibre so as to provide a plurality of longitudinal acoustic sensor portions along the railway;
analysing the acoustic response from said acoustic sensor portions to detect a signature indicative of a train (202) having separated,
**characterised in that** said detecting said signature comprises detecting a first acoustic event associated with a first part of a first train and a second acoustic event associated with a second different part of the first train and detecting that the separation between the first acoustic event and second acoustic event is beyond a threshold.

2. A method as claimed in claim 1 comprising analysing the acoustic response from the acoustic sensor portions to locate an acoustic signal (302) indicative of the front of the train and an acoustic signal (303) associated with the rear of the train and repeatedly determining the distance between the acoustic signals indicative of the front and the rear of the train and detecting if said distance increases beyond a threshold amount.

3. A method as claimed in claim 2 wherein said threshold is based on the previously determined distance between the front and rear of the train.

4. A method as claimed in any of claims 2 to 3 wherein detecting the acoustic signals associated with the front and rear of the train respectively comprises identifying the beginning (302) and end (303) of a continuous acoustic disturbance indicative of the train.

5. A method as claimed in any of claims 2 to 4 wherein detecting the acoustic signals associated with the front and rear of the train respectively comprises identifying the first sensing portion and last sensing portion to detect an acoustic signature resulting from the wheelsets passing track features (402).

6. A method as claimed in any preceding claim comprising identifying acoustic features associated with separate cars (401) of the train.

7. A method as claimed in claim 6 comprising identifying acoustic signals associated with a wheelset and detecting the interval (T₂, T₃) between acoustic signals corresponding to different wheelsets.

8. A method as claimed in claim 7 wherein identifying acoustic signals associated with a wheelset comprises identifying a relatively intense broadband noise component in the acoustic response from said acoustic sensor portions.

9. A method as claimed in claim 7 or claim 8 wherein identifying acoustic signals associated with a wheelset comprises identifying acoustic signals associated with a wheelset passing a track feature (402).

10. A method as claimed in any of claims 7 to 9 comprising identifying the interval (T₂) between acoustic features generated by the wheelsets on the same car and the interval (T₃) between features generated by wheelsets on different cars.

11. A method as claimed in claim 10 wherein the method comprises determining whether the interval between features generated by wheelsets on different cars exceeds a threshold based on the interval between wheelsets on the same car.

12. A method as claimed in any preceding claim comprising, in the event a train having separated is detected, identifying the location of the train split.

13. A computer program for performing the method of any preceding claim.

14. A system for detecting for train split involving a portion of a train becoming separated from the rest of the train, the system comprising:
a controller configured to:
receive measurement signals from at least one distributed acoustic sensor unit (106) configured to perform distributed acoustic sensing on at least one optical fibre (104) deployed along the length of a railway (201) by interrogating the optical fibre with electromagnetic radiation and detecting, using a photodetector, the radiation Rayleigh backscattered from intrinsic scattering sites within the fibre so as to provide a plurality of longitudinal acoustic sensor portions along the railway;
and analyse the acoustic response from said acoustic sensor portions to detect a signature indicative of a train separation, **characterised in that** the controller is configured to detect said signature by detecting a first acoustic event associated with a first part of a first train (202) and a second acoustic event associated with a second different part of the first train (202) and detecting that the separation between the first acoustic event and second acoustic event is beyond a threshold.

15. A system as claimed in claim 13 further comprising at least one distributed acoustic sensor unit.

## Patentansprüche

1. Verfahren zum Erkennen, dass ein Teil eines Zugs von dem Rest des Zugs getrennt worden ist, umfassend:
Ausführen einer verteilten akustischen Erfassung über mindestens einen Lichtwellenleiter (104a, 104b), der entlang einer Eisenbahnlinie (201) eingerichtet ist, durch Abfragen des Lichtwellenleiters mit elektromagnetischer Strahlung und Erfassen unter Verwendung eines Fotodetektors der Rayleigh-Strahlung, die von intrinsischen Streustellen innerhalb der Faser zurückgestreut wird, um eine Vielzahl von längsgerichteten akustischen Sensorabschnitten entlang der Eisenbahnlinie zu schaffen;
Analysieren der akustischen Antwort von den akustischen Sensorabschnitten, um eine Signatur zu erfassen, die indikativ für einen Zug (202) ist, der sich getrennt hat,
**dadurch gekennzeichnet**, dassdas Erfassen der Signatur ein Erfassen eines ersten akustischen Ereignisses umfasst, das mit einem ersten Teil eines ersten Zugs assoziiert ist, und eines zweiten akustischen Ereignisses, das mit einem zweiten, anderen Teil des ersten Zugs assoziiert ist, und Erfassen, dass die Trennung zwischen dem ersten akustischen Ereignis und dem zweiten akustischen Ereignis einen Schwellenwert überschreitet.

2. Verfahren gemäß Anspruch 1, umfassend ein Analysieren der akustischen Antwort von den akustischen Sensorabschnitten, um ein akustisches Signal (302), das indikativ für den vorderen Teil des Zugs ist und ein akustisches Signal (303), das mit dem hinteren Teil des Zuges assoziiert ist, festzustellen, und wiederholtes Bestimmen des Abstand zwischen den akustischen Signalen, die indikativ für den vorderen und hinteren Teil des Zugs sind, und feststellen, ob der Abstand über einen Schwellenwert hinaus zunimmt.

3. Verfahren gemäß Anspruch 2, wobei der Schwellenwert auf einem vorher bestimmten Abstand zwischen dem vorderen und dem hinteren Teil des Zugs basiert.

4. Verfahren gemäß einem der Ansprüche 2 bis 3, wobei ein Erfassen der akustischen Signale, die dem vorderen und hinteren Teil eines Zuges assoziiert sind, jeweils ein Identifizieren des Anfangs (302) und des Endes (303) einer kontinuierlichen akustischen Störung, die indikativ für den Zug ist, umfasst.

5. Verfahren gemäß einem der Ansprüche 2 bis 4, wobei ein Erfassen der akustischen Signale, die mit dem vorderen und hinteren Teil eines Zugs assoziiert sind, ein Identifizieren des ersten Messabschnitts und des letzten Messabschnitts umfasst, um eine akustische Signatur zu erfassen, die aus dem Radsatz resultiert, wenn er an bestimmten Schienenmerkmalen (402) vorbeifährt.

6. Verfahren gemäß einem der vorherigen Ansprüche, umfassend ein Identifizieren akustischer Merkmale, die mit separaten Wagen (401) des Zugs assoziiert sind.

7. Verfahren gemäß Anspruch 6, umfassend ein Identifizieren eines akustischen Signals, das mit einem Radsatz assoziiert ist, und Erfassen des Intervalls (T₂, T₃) zwischen akustischen Signalen, die den verschiedenen Radsätzen entsprechen.

8. Verfahren gemäß Anspruch 7, wobei ein Identifizieren von akustischen Signalen, die mit einem Radsatz assoziiert sind, ein Identifizieren einer relativ intensiven breitbandigen Rauschkomponente in der akustischen Antwort von den akustischen Sensorabschnitten umfasst.

9. Verfahren gemäß Anspruch 7 oder 8, wobei ein Identifizieren von akustischen Signalen, die mit einem Radsatz assoziiert sind, ein Identifizieren akustischer Signale umfasst, die mit einem Radsatz assoziiert sind, der an einem bestimmten Schienenmerkmal (402) vorbeifährt.

10. Verfahren gemäß einem der Ansprüche 7 bis 9, umfassend ein Identifizieren des Intervalls (T₂) zwischen akustischen Merkmalen, die von den Radsätzen desselben Fahrzeugs erzeugt werden, und des Intervalls (T₃) zwischen Merkmalen, die von Radsätzen verschiedener Fahrzeuge erzeugt werden.

11. Verfahren gemäß Anspruch 10, wobei das Verfahren ein Bestimmen umfasst, ob der Abstand zwischen Merkmalen, die von Radsätzen an verschiedenen Fahrzeugen erzeugt werden, einen Schwellenwert überschreitet, basierend auf dem Abstand zwischen Radsätzen an demselben Fahrzeug.

12. Verfahren gemäß einem der vorherigen Ansprüche, umfassend in dem Fall, dass eine Trennung des Zugs festgestellt wird, ein Identifizieren der Stelle der Zugtrennung umfasst.

13. Computerprogramm zum Ausführen des Verfahrens gemäß einem der vorherigen Ansprüche.

14. System zum Erkennen einer Zugtrennung, das involviert, dass ein Teil des Zugs von dem Rest des Zuges getrennt wird, das System umfassend:
eine Steuerung, die zu Folgendem konfiguriert ist:
Empfangen von Messsignalen von mindestens einer verteilten akustischen Sensoreinheit (106), die konfiguriert ist, um eine verteilte akustische Abtastung auf mindestens einer optischen Faser (104) auszuführen, die entlang der Länge einer Eisenbahnlinie (201) verlegt ist, indem sie die optische Faser mit elektromagnetischer Strahlung abfragt und unter Verwendung eines Photodetektors die von intrinsischen Streustellen innerhalb der Faser zurückgestreute Rayleigh-Strahlung erfasst, um eine Vielzahl von längsgerichteten akustischen Sensorabschnitten entlang der Eisenbahnlinie zu erzeugen;
und Analysieren der akustischen Antwort von den akustischen Sensorabschnitten, um eine Signatur zu erfassen, die indikativ für eine Zugtrennung ist, **dadurch gekennzeichnet, dass** die Steuerung konfiguriert ist, um die Signatur zu erfassen, indem sie ein erstes akustisches Ereignis, das mit einem ersten Teil eines ersten Zuges (202) assoziiert ist, und ein zweites akustisches Ereignis, das mit einem zweiten, anderen Teil des ersten Zugs (202) assoziiert ist, zu erfassen und Erfassen, dass der Abstand zwischen dem ersten akustischen Ereignis und dem zweiten akustischen Ereignis jenseits eines Schwellenwerts ist.

15. System gemäß Anspruch 13, ferner umfassend mindestens eine verteilte akustische Sensoreinheit.

## Revendications

1. Une méthode pour détecter qu'une portion d'un train est déconnectée du reste du train, comprenant :
la détection acoustique répartie sur au moins une fibre optique (104a, 104b) déployée le long d'un chemin de fer (201) en interrogeant la fibre optique avec un rayonnement électromagnétique et en détectant, à l'aide d'un photodétecteur, le rayonnement rétrodiffusé par diffusion de Rayleigh à partir de sites de diffusion intrinsèques à l'intérieur de la fibre de manière à fournir une pluralité de portions longitudinales de capteur acoustiques le long du chemin de fer ;
analysant la réponse acoustique desdites portions de capteur acoustique pour détecter une signature indicative d'un train (202) ayant déraillé,
**caractérisée en ce que** ladite détection de ladite signature comprend la détection d'un premier événement acoustique associé à une première partie d'un premier train et à un second événement acoustique associé à une seconde partie différente du premier train et la détection du fait que la séparation entre le premier événement acoustique et le second événement acoustique dépasse un seuil.

2. Une méthode selon la revendication 1, comprenant l'analyse de la réponse acoustique à partir des portions de capteur acoustique pour localiser un signal acoustique (302) indicatif de l'avant du train et un signal acoustique (303) associé à l'arrière du train et déterminer à plusieurs reprises la distance entre les signaux acoustiques indicatifs de l'avant et de l'arrière du train et détecter si ladite distance dépasse un seuil.

3. Une méthode selon la revendication 2, dans laquelle ledit seuil est basé sur la distance préalablement déterminée entre l'avant et l'arrière du train.

4. Une méthode selon l'une quelconque des revendications 2 à 3, dans laquelle la détection des signaux acoustiques associés à l'avant et à l'arrière du train comprend respectivement l'identification du début (302) et de la fin (303) d'une perturbation acoustique continue indicative du train.

5. Une méthode selon l'une quelconque des revendications 2 à 4, dans laquelle la détection des signaux acoustiques associés à l'avant et à l'arrière du train comprend respectivement l'identification de la première portion de captage et de la dernière portion de captage pour détecter une signature acoustique résultant des essieux montés sur les rails (402).

6. Une méthode selon l'une quelconque des revendications précédentes, comprenant l'identification de dispositifs acoustiques associés à des voitures (401) séparées du train.

7. Une méthode selon la revendication 6, comprenant l'identification de signaux acoustiques associés à un train de roues et la détection de l'intervalle (T₂, T₃) entre des signaux acoustiques correspondant à des essieux montés différents.

8. Une méthode selon la revendication 7, dans laquelle l'identification de signaux acoustiques associés à des essieux montés comprend l'identification d'une composante de bruit à large bande relativement intense dans la réponse acoustique provenant desdites portions acoustiques de capteur.

9. Une méthode selon la revendication 7 ou la revendication 8, dans laquelle l'identification de signaux acoustiques associés à un train de roues comprend l'identification de signaux acoustiques associés à des essieux montés sur les rails (402).

10. Une méthode selon l'une quelconque des revendications 7 à 9, comprenant l'identification de l'intervalle (T₂) entre les dispositifs acoustiques générés par les essieux montés sur la même voiture et l'intervalle (T₃) entre les dispositifs générés par les essieux montés sur des voitures différentes.

11. Une méthode selon la revendication 10, dans laquelle la méthode consiste à déterminer si l'intervalle entre les dispositifs générés par des essieux montés sur des voitures différentes dépasse un seuil basé sur l'intervalle entre les essieux montés sur la même voiture.

12. Une méthode selon l'une quelconque des revendications précédentes, comprenant, dans le cas où un train déraillé est détecté, identifiant l'emplacement de la division de train.

13. Un programme informatique pour la mise en œuvre de la méthode selon l'une quelconque des revendications précédentes.

14. Un système de détection de déraillement d'une portion de train déconnecté du reste du train, le système comprenant :
un contrôleur configuré pour :
recevoir des signaux de mesure provenant d'au moins une unité de capteur acoustique distribuée (106) configurée pour assurer des détections acoustiques distribuées sur au moins une fibre optique (104) déployée le long d'un chemin de fer (201) en interrogeant la fibre optique avec un rayonnement électromagnétique et en détectant, à l'aide d'un photodétecteur, le rayonnement rétrodiffusé par diffusion de Rayleigh à partir de sites de diffusion intrinsèques à l'intérieur de la fibre de manière à fournir une pluralité de portions longitudinales de capteur acoustiques le long du chemin de fer ; et
analyser la réponse acoustique desdites portions de capteur acoustique pour détecter une signature indicative d'une déconnection de train,
**caractérisée en ce que** le contrôleur est configuré pour capter ladite signature en détectant un premier événement acoustique associé à une première portion d'un premier train (202) et un second événement acoustique associé à une seconde portion différente du premier train (202) et pour détecter le fait que la séparation entre le premier événement acoustique et le second événement acoustique dépasse un seuil.

15. Un système selon la revendication 13, comprenant davantage au moins une unité distribuée de capteur acoustique.
